# EUROPEAN PATENT APPLICATION

(11) **EP 4 821 798 A1**
(43) Date of publication of application: **14.10.2026**
(21) Application number: 25168815.6
(22) Date of filing: 07.04.2025
(51) Int. Cl.: B62D 25/00, B62D 25/02, B60K 1/04, B62D 21/15, B62D 25/20, B62D 29/00

(54) **VEHICLE BODY**

(71) Applicant: Volvo Car Corporation, 405 31 Göteborg (SE)
(72) Inventor: PETTERSSON, Lars, 40531 Göteborg (SE); CLARK, Austen, 40531 Göteborg (SE); RÖSEN, Stefan, 40531 Göteborg (DE)
(74) Representative: Kransell & Wennborg KB

(57) **Abstract**

The disclosure relates to a vehicle body (1) comprising a rear part structure (10), a battery frame structure (100), and a door frame structure (60), wherein the rear part structure (10) comprises at least one side member (40), the at least one side member (40) comprising a first side member portion (41) attached to the battery frame structure (100) and a second side member portion (42) attached to the door frame structure (60), wherein the second side member portion (42) is configured as a panel with an outer contact surface (43) forming a contact interface with an inner contact surface (72, 82) of the door frame structure (60).

## Description

### TECHNICAL FIELD

The present disclosure relates to a vehicle body and a vehicle.

### SUMMARY

Vehicle bodies can comprise several different structures, which may be attached to one another. One of these structures is the rear part structure, which is generally located in the rear end of a vehicle. The rear part structure may be used for a trunk of the vehicle, where the rear part structure supports a luggage compartment floor inside the trunk. Luggage or other loads can be placed on the luggage compartment floor inside the trunk and are consequently supported by the rear part structure. The rear part structure however can have many more parts attached thereto, such as, for example, shock absorbers or generally a rear vehicle suspension, batteries, and so on.

The rear part structure may comprise side members or side reals, which may be formed as beams and attached to a door frame structure of the vehicle body, at which one or more vehicle doors may be attached. These side members or side rails may be extending from a base portion of a monolithically designed or casted rear part structure. Specifically, the door frame structure may be or form at least part of a passenger cabin structure, which may surround the cabin of the vehicle, in which the passengers may take place. The rear part structure on the other hand may be a trunk or luggage structure, in which luggage and/or vehicle components such as a battery may be placed.

The rear part structure may be attached with its side members to a sill and/or C-pillar, which may be forming or be part of the door frame structure. In this area, a robust attachment is required to transfer loads during general use of the vehicle and in the event of a crash. Specifically, the area may be a corner of attachment which may also be useful for locating a vehicle components such as a battery, specifically in case of an electric vehicle, as it enables a squarer corner package for the battery. However, this area creates a design conflict where the structure requires space to provide for a robust attachment, but the battery needs to be able to use that space to enable a battery with a larger energy volume.

This problem is at least partially solved or alleviated by the subject matter of the independent claims of the present disclosure, wherein further examples are incorporated in the dependent claims.

According to a first aspect, there is provided a vehicle body comprising a rear part structure, a battery frame structure, and a door frame structure, wherein the rear part structure comprises at least one side member, the at least one side member comprising a first side member portion attached to the battery frame structure and a second side member portion attached to the door frame structure, wherein the second side member portion is configured as a panel with an outer contact surface forming a contact interface with an inner contact surface of the door frame structure.

By virtue of the first side member portion and the second side member portion, a particularly strong corner connection of the rear part structure to the door frame structure and the battery frame structure is enabled. Specifically, while the first side member portion of the rear part structure attaches to the battery frame structure, the second side member portion forms a contact interface with its outer contact surface to an inner contact surface of the door frame structure. This contact interface may transfer loads, forces, or stresses between the two surfaces and thus the side member and the door frame structure. This transfer of loads, forces, or stresses is in addition to the load, force, or stress transfer between the first side member and the battery frame structure, which may be attached to the door frame structure.

Advantageously, by providing a panel with an contact surface rather than a bulky structure or extending the side member with its first side member to attach it to the door frame structure, the second side member portion is provided with a relatively slim or thin in profile. Thus, the second side member portion being configured as a panel and forming a contact interface may enable the corner of a battery or battery back of the vehicle, which may be supported by the battery frame structure, to be relatively large and, in particular, substantially square or rectangular. This provides more package effectiveness of the battery compared to bulkier attachment solutions of the side member to the door frame structure.

The issue of providing a sufficiently strong corner connection at the side members and the door frame structure is not limited to electric vehicles. However, it is particularly relevant for electric vehicles such as but not limited to battery-electric vehicles, where much space is utilized inside the vehicle body for the battery or, in other words, battery back, which may comprise multiple batteries or battery cells. Specifically, the first battery-electric vehicles brought to market were generally based on platforms for internal combustion engines, which therefore required a compromised battery shape. Pure battery-electric vehicles need to be more optimized around the battery volume and efficiency.

The vehicle body may in particular be a car body, more particularly a passenger car body. The vehicle body may comprise further structures in addition to the rear part structure, such as at least the battery frame structure and the door frame structure. Generally, any structure herein may be a multi-component structure or a monolithically designed structure. However, preferably, at least the rear part structure may be a casted part, in particular made from or comprising aluminum.

The rear part structure may generally form a rear part of the vehicle body. Specifically, a bumper may be attached to the rear part structure. The rear part structure may be part of a trunk or generally a compartment of the vehicle or, in other words, form at least partially a trunk or compartment of the vehicle, in particular a support structure for the trunk such that luggage or other loads can be supported and consequently transported in the rear of the vehicle.

The battery frame structure may be configured to at least partially or completely support and/or accommodate a battery or, in other words, a battery pack, specifically a traction battery for an electric vehicle. The battery frame structure may be located adjacent to or at the rear part structure. Specifically, the battery frame structure may be located at or near the rear end of the vehicle body or vehicle. For example, the battery frame structure may extend at least partially together with and/or underneath the rear part structure.

The door frame structure may be configured to have one or more vehicle doors attached thereto or located thereat. Specifically, the door frame structure may comprise at least a C-pillar structure and a sill structure. Thereby, the door frame structure may at least partially form the door frame, which can be enclosed by a corresponding vehicle door, in particular a passenger vehicle door, not a trunk door. Accordingly, the door frame structure may in particular be a passenger vehicle door frame structure. The C-pillar structure may define a C-pillar ring extending around the vehicle body. The sillar structure may connect the C-pillar structure to a B-pillar structure, which may also be part of the door frame structure or at least of the vehicle body.

In an area of the vehicle body, the rear part structure, the battery frame structure, and the door frame structure may be attached to one another. This area may be a corner of the vehicle body, where the respective structures are attached with one another.

In an example, the door frame structure may comprise a C-pillar structure and a sill structure. The outer contact surface of the second side member portion may be attached to the inner contact surface of an inner C-pillar portion of the C-pillar structure and/or an inner sill portion of the sill structure. The inner C-pillar portion or inner sill portion are portions on the interior side of the vehicle body, closer to or oriented towards or facing a cabin or passenger compartment of the vehicle body. Specifically, the terms inner and outer are used herein for different features, unless otherwise indicated, to specify their location on or towards an interior side of the vehicle body and an exterior side of the vehicle body, respectively. The inner sill portion may be or comprise a shell of the sill structure, specifically of a sill beam located inside an inner and outer sill. The sill beam of the sill structure can be configured for crash energy absorption in case of a side impact. The inner sill portion may structurally reinforce the vehicle body on an inside of the vehicle body and connect to other structural elements of the vehicle body, such as the inner C-pillar portion. An outer sill portion may be located on external side of the vehicle body. The outer sill portion may be a shell that covers the sill beam and encloses it between the inner sill portion and the outer sill portion. Specifically, the outer sill portion may be a visible exterior part of the vehicle body and sill structure. The outer sill portion may additionally provide structural rigidity and contribute to the side-impact protection of the sill beam. The C-pillar structure may similarly comprise an inner C-pillar portion and an outer C-pillar portion as interior and exterior shells of the C-pillar structure. The C-pillar structure may be configured for crash energy absorption in case of side or rollover impacts.

In an example, the at least one side member and/or the battery frame structure may be attached to a sill beam of the sill structure. The sill beam may for example be configured as an extruded part, e.g. made from or comprising aluminum. Typically, it is used for energy absorption during a side crash. However, by attaching it to the at least one side member, it can advantageously add to the overall vehicle body stiffness through the rear part structure. Specifically, the second side member portion may be attached or connected to the sill beam. Additionally, or alternatively, the battery frame structure may be attached to the sill beam. For example, the second side member portion may comprise one or more holes, e.g. three holes. Through these holes, flow drill screws or other fastening means may be attaching the second side member portion and/or the battery frame structure to the sill beam.

In an example, the second side member portion may extend in length along a length of the first side member portion. Accordingly, both side member portions may extend in length together or in parallel. Further, the second side member portion may extend in width substantially perpendicular to a length of the first side member portion or generally to the first side member portion. Specifically, there may be a substantially right angle (which includes a range of 80° to 100°, in particular a range of 85° to 95°) between the width extension of the second side member portion and the length extension of the first side member portion. Thereby, the panel may protrude from the first side member portion at a substantially right angle. This enables that the first side member portion can be rested or placed onto the battery frame structure, to which it may be attached from the top via one or more fasteners, e.g., bolts. On the other hand, the panel may form the contact interface at a right angle relative thereto and with the inner contact surface. Thereby, there is a substantially rectangular or square shaped space in between the first and second side member portions, which enables to accommodate a substantially rectangular or square shaped battery frame structure and/or battery in there.

In an example, the second side member portion may extend in length along a length of the door frame structure, in particular of the sill structure. The second side member portion may extend in width along a height of the door frame structure, in particular of the sill structure. Thereby, the panel may be extending with its width along the height of the door frame structure, specifically of the sill structure.

In an example, the first side member portion may be configured as a beam. The first side member portion and the second side member portion may extend together in length. The first side member portion may be tapered along its length. The taper of the beam configuration of the first side member portion may be coming from a wheelhouse portion of the rear part structure, from which it may be extending towards the door frame structure. Thereby, the rear part structure may conform in form factor to the door frame structure, specifically at the C-pillar structure. As a beam or, in other words, rail, the first side member portion may be relatively stiff and provide for a robust attachment to the battery frame structure. The overall robust and stiff connection in this corner area is enhanced by the contact interface formed between the outer and inner contact surfaces.

Specifically, the outer contact surface of the second side member portion may be attached to the inner contact surface or surfaces of the door frame structure. In an example, the outer contact surface of the second side member portion may be attached to the inner contact surface by one or more rivets and/or an adhesive. An adhesive can advantageously be used along the entire contact interface. Additionally, or alternatively, one or more rivets may be used to secure the contact interface. Alternatively, any other mechanical connection means may be used.

In an example, the first side member portion may be attached to the battery frame structure by one or more bolts. The one or more bolts may be extending in length in parallel to a width of the second side member portion. Accordingly, the attachment of the first side member portion to the battery frame structure may be generally in a vertical direction, whereas the attachment of the second side member portion to the door frame structure is generally in a horizontal direction. Alternatively, any other mechanical connection means may be used.

In an example, the first side member portion may comprise one or more reinforcement ribs extending in length along a length of the first side member portion. The ribs can, in particular in the case of a tapered beam or rail configuration of the first side member portion, provide additional stiffness and thereby reinforce the overall connection in the corner area of the battery frame structure, rear part structure, and door frame structure.

In an example, the vehicle body may comprise two side members extending in length in parallel to one another, each one of the two side members comprising a first side member portion attached to the battery frame structure and a second side member portion attached to the door frame structure, wherein the second side member portion of each side member is configured as a panel with an outer contact surface forming a contact interface with an inner contact surface of the door frame structure. Specifically, the two side members may be equally designed to one another and as specified herein. Accordingly, any feature mentioned herein with respect to the at least one side member may equally apply to the other side member located on an opposite side of the vehicle body.

In an example, the battery frame structure may be attached to an inner sill portion of a sill structure of the door frame structure. Thereby, the sill structure attachment may be further enhanced, in particular in addition to the attachment to the second side member portion or as alternative thereto, without attachment to the side member.

In an example, the battery frame structure may be an extruded structure. For example, the battery frame structure may be made from or comprise aluminum. Accordingly, the battery frame structure generally has straight or linear walls, which can benefit from the additional space, specifically square or rectangular space, underneath the side members as discussed herein.

In an example, the rear part structure may be a monolithically casted structure or, in other words, casting. All portions and members of the rear part structure may be integrally designed with one another, meaning that all these portions and members are part of the one-piece or monolithic structure of the rear part structure. The rear part structure may be made from one single material, specifically a metal, e.g., aluminum or an aluminum alloy. Such aluminum casting may be made entirely from aluminum or can comprise aluminum, e.g., predominantly aluminum, and other materials, specifically metals. In particular, the rear part structure may be advantageously casted from metal, specifically as a single part in the form of a mega casting. For example, for the mega casting, a High-Pressure Die Casting (HDPC) process may be used, where the molten metal, such as but not limited to aluminum, is pushed into a die or, in other words, mold. This die consists of die tools that are pressed together and sealed just before the molten metal is pushed in. After the metal is pushed in, the tools are retracted, and the die opens again, and the casted metal rear part structure can be removed from the open die.

In an example, the rear part structure may comprise a base portion extending between two wheelhouse portions of the rear part structure, and/or the rear part structure may comprise at least one floor support structure for supporting a luggage compartment floor thereon. The wheelhouse portions may be configured for partially housing a wheel therein. The wheelhouse portions may be located at opposite ends of the rear part structure, in particular of the base portion. The wheelhouse portions may generally comprise a convex or bulge shape, which may be extending with its convex or bulge shape towards the base portion portion. Also, the wheelhouse portions may generally have an at least partially round or circular circumference or perimeter. Thereby, the wheels of the vehicle can be at least partially received within a space formed by the convex or bulge shape and within the at least partially round or circular perimeter of the wheelhouse portions. Each one of the wheelhouse portions may comprise a shock absorber segment for receiving a shock absorber. The floor support structure can be supported in between the wheelhouse portions and/or on the base portion portion. The floor support structure may be configured to support the luggage compartment floor thereon. At least one or two side members or side rails may be extensions of each wheelhouse portions. Specifically, the at least one or both side members may extend from each one of the wheelhouse portions and in parallel to one another.

According to a second aspect, there is provided a vehicle comprising the vehicle body.

For example, the vehicle may be a car or automobile. Specifically, the vehicle may be a passenger car. The vehicle body may accordingly comprise an A-pillar structure, a B-pillar structure, a C-pillar structure and optionally a D-pillar structure, which may be attached to one another to form part of the vehicle body's structure.

For example, the vehicle may be an electric vehicle. As electric vehicle, the battery inside the vehicle may be a traction battery. Further, the electric vehicle may comprise an electric propulsion system, which includes the battery, and an electric motor coupled to each other. The electric vehicle may for example be a battery electric vehicle, a hybrid electric vehicle, or a fuel cell vehicle.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective partial view on a rear part structure;
- Figure 2: shows a perspective interior view on a corner area of a vehicle body, where the rear part structure of Fig. 1 is attached to a door frame structure;
- Figure 3: shows a cross-sectional schematic view on a first example of a corner area of a vehicle body;
- Figure 4: shows a bottom view onto the first example of the corner area of the vehicle body;
- Figure 5: shows a cross-sectional schematic view on a second example of a corner area of a vehicle body; and
- Figure 6: shows a bottom view onto the second example of the corner area of the vehicle body.

### DETAILED DESCRIPTION

The Figures are merely schematic representations and serve only to illustrate examples of the disclosure. Identical or equivalent elements are in principle provided with the same reference signs.

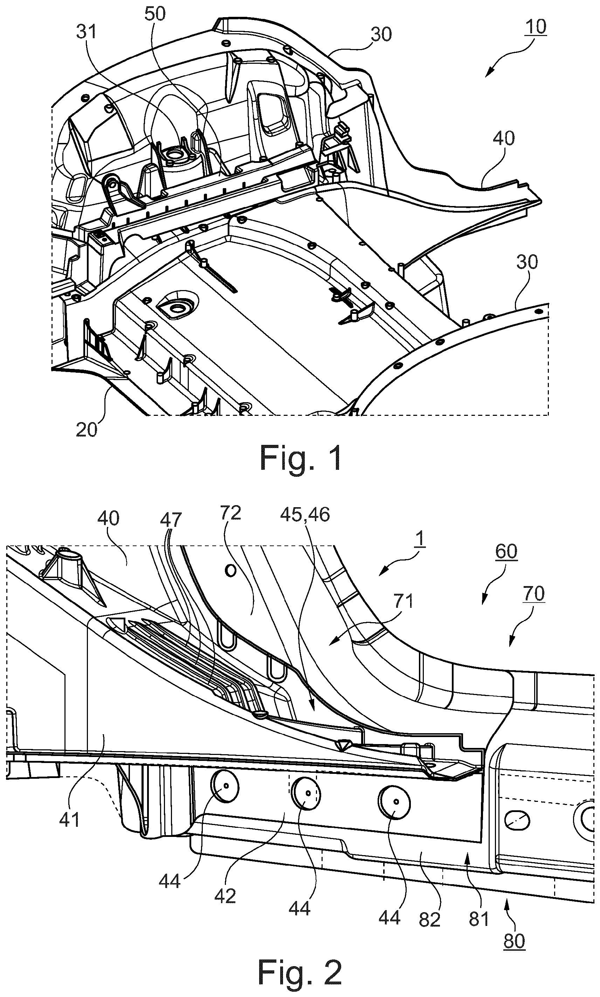

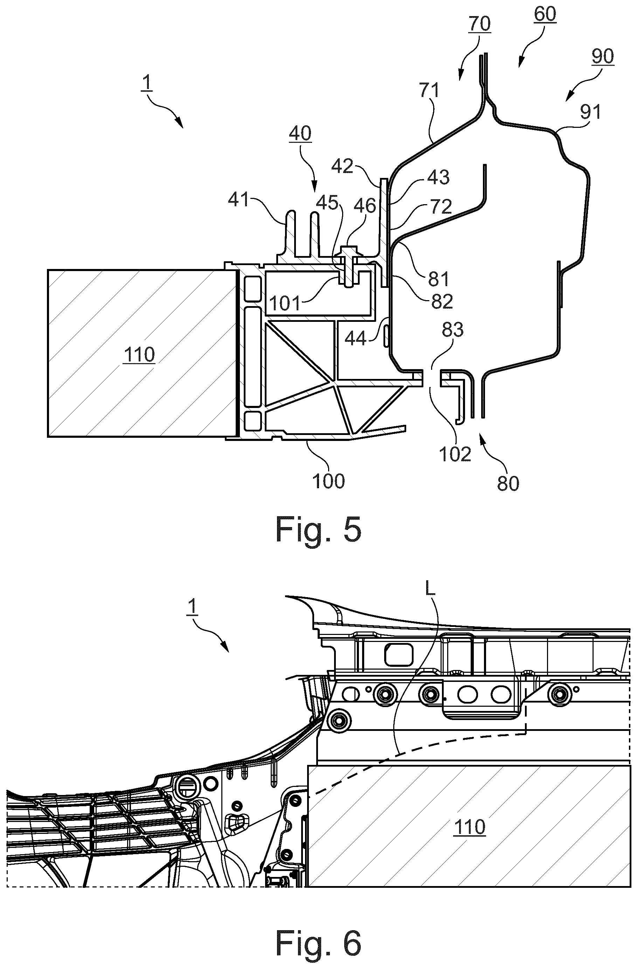

Fig. 1 shows a perspective partial view on a rear part structure 10 for a vehicle body 1 (see Figs. 5 and 6). The rear part structure 10 comprises a base portion 20 and two wheelhouse portions 30, which are located opposite of one another and are arranged for partially housing a wheel therein. The base portion 20 extends in between the two wheelhouse portions 30.

The wheelhouse portion 30 may comprise support members, which are supporting a floor support structure 50 thereon, which in turn may be used for supporting a luggage compartment floor thereon (not shown). Further, the wheelhouse portions 30 may comprise shock absorber segments 31 for receiving a shock absorber (not shown).

The rear part structure 10 further comprises side members 40 extending in the example of Fig. 1 from the wheelhouse portions 30 towards the front of the vehicle body 1 or generally a vehicle comprising the vehicle body 1 (due to the partial view of Fig. 1 one of the side members 40 at one of the two wheelhouse portions 30 is not shown). Alternatively, the side members 40 could alternatively or additionally extend from the base portion 20 towards the front of the vehicle body 1. The rear of the vehicle body 1 or vehicle is opposite of the side members 40 to the left of Fig. 1, whereas the front of the vehicle body 1 is to the right of Fig. 1.

In this example, the wheelhouse portions 30, the base portion 20 and the side members 40 may be integrally formed with one another by an aluminum die casting of the rear part structure 10.

Figure 2 shows a perspective interior view on a corner area of the vehicle body 1 of Fig. 1, where the rear part structure 10 of Fig. 1 is attached to a door frame structure 60. Specifically, in this example, one of the two side members 40 is shown at one of two opposite corner areas inside the vehicle body 1. This side member 40 is attached to the door frame structure 60.

In this example, the door frame structure 60 is partially and schematically shown with an inner C-pillar portion 71 of a C-pillar structure 70 and an inner sill portion 81 of a sill structure 80 of the door frame structure 60.

The side member 40 comprises two side member portions 41, 42. A first side member portion 41 is configured as a beam or rail that is tapered along its length towards the door frame structure 60 or generally towards the front of the vehicle body 1. In this example, the first side member portion 41 comprises several parallel reinforcement ribs 47 extending along the length of the first side member portion 41. Further, the first side member portion 41 may be comprising several holes 45 and bolts 46 attaching it vertically to a battery frame structure 100 of the vehicle body 1 at the corner area (see Figs. 5 and 6).

A second side member portion 42 is configured as a panel, in particular as a flat panel. In this example, the panel has two opposite flat surfaces, one of which is an inner or interior surface and the one of which is an outer or exterior surface, which is also referred to herein as an outer contact surface 43 (see Fig. 5).

Specifically, the second side member portion 42 or panel may be formed as, configured as, or comprise a plate or blade. Specifically, the panel may be plate-shaped or blade-shaped. This means that the panel has a much smaller thickness than its width and length. For example, a thickness of the panel may be relatively small, e.g., in the range of 0.1 cm to 3 cm, specifically in the range of 0.2 cm to 2 cm, and further in particular in the range of 0.3 cm to 1 cm. Thereby, the profile of the panel may be relatively slim, and it may use up very little space inside the vehicle body 1 in the horizontal plane. A width of the panel on the other hand may be relatively larger, e.g., in the range of 2 cm to 20 cm, specifically in the range of 3 cm to 18 cm, further in particular in the range of 4 cm to 16 cm. A length of the panel may for example be in the range of 5 to 80 cm, in particular in the range of 10 cm to 70 cm, specifically in the range of 15 cm to 60 cm.

As seen in Figs. 2 and 5, the outer contact surface 43 of the second side member portion 42 or panel forms a contact interface with an inner contact surface 72, 82 of the inner C-pillar portion 71 and/or the inner sill portion 81. The contact interface may be formed through attachment of the respective surfaces 43, 72, 82 to each other by an adhesive and/or one or more rivets (not shown), for example. Through this contact interface, the rear part structure 10 through the side members 40 may not only transfer forces, loads, or stress to the battery frame structure 100 via the first side member portion 41 but additionally to the door frame structure 60 via the second side member portion 42.

As seen in Fig. 2, the second side member portion 42 may comprise several holes 44. Through these holes 44, fasteners like flow drill screws may be attaching the battery frame structure 100 and/or the second side member portion 42 to a sill beam (not shown) of the sill structure 80.

Further, as seen in Fig. 2, the first side member portion 41 and the second side member portion 42 extend together in length. Further, the second side member portion 42 extends in width substantially perpendicular to a length of the first side member portion 41, thereby forming a substantially right angle between the side member portions 41, 42. Further, the second side member portion 42 is arranged at a side or on an outer periphery of the first side member portion 41 or extends from that side or outer periphery. Specifically, the second side member portion 42 and the first side member portion 41 form a substantially square or rectangular space or void therebetween. This space or void can be filled with a correspondingly square or rectangular shaped battery 110 or battery frame structure 100 (see Figs. 5 and 6).

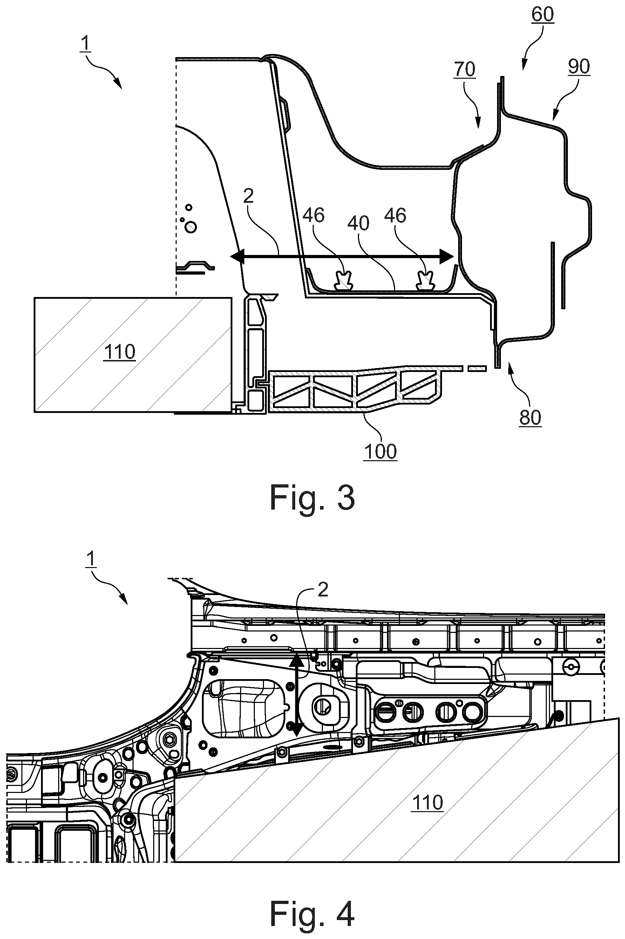

Figure 3 shows a cross-sectional schematic view on a first example of a corner area of a vehicle body 1, which does not use the design of the side members 40 as discussed above with reference to Figs. 1 and 2. Figure 4 shows a bottom view onto this first example of the corner area of the vehicle body 1.

As may be seen in Figs. 3 and 4, in a conventional design of side members 40 without the two side member portions 41, 42 with the second side member portion 42 being configured as a panel, the attachment of the side member 40 to the battery frame structure 100 and the further attachments of the door frame structure 60 requires a relatively large width of the side member 40 in the horizontal direction 2. Therefore, lots of space is lost in the corner area of attachment of the respective structures 10, 60, 100 to one another, which cannot be used for the battery frame structure 100 and thus the battery 110. As seen in Fig. 4, this may require the battery 110 to be tapered in shape with respect to the horizontal direction, which reduces the packing efficiency of the battery 110 and ultimately the range of the electric vehicle.

Figure 5 on the other hand shows a cross-sectional schematic view on a second example of a corner area of a vehicle body 1, which utilizes the design of the side member 40 and the other features of the vehicle body 1 as shown in Figs. 1 and 2. Figure 6 shows a bottom view onto the second example of the corner area of the vehicle body 1.

As seen in Fig. 5, the first side member portion 41 is seen to be attached to the battery frame structure 100 vertically through an opening 101 inside the battery frame structure 100 and a hole 45 in the side member 40 and a bolt 46. Multiple such attachments may be provided. The second side member portion 42 is attached with its contact interface to the inner C-pillar portion 71 and/or the inner sill portion 81 at its inner contact surface or surfaces 72, 82.

Additionally, the battery frame structure 100 may be attached through a further opening thereof and a further hole 83 inside the C-pillar structure 70, specifically the inner C-pillar portion 71, and a fastener such as a bolt (not shown). The battery frame structure 100 is shown to accommodate the battery 110 in this schematic and only partial illustration. Fig. 5 further shows a rocker panel structure 90, which may comprise an outer sill and/or C-pillar portion 91 as exterior shells of the vehicle body 1 as opposed to the interior shells of portions 71, 81.

As seen in Fig. 6, this design enables a rectangular shaped battery 110 of increased volume as opposed to the tapered battery 110 in Fig. 4. A dashed line L indicates the limitation when the design or construction of Figs. 3 and 4 would be applied in the vehicle body 1 of Figs. 1, 2, 5 and 6, which requires a tapered battery form in the body vehicle 1 as explained with reference to Figs. 3 and 4.

In summary, the vehicle body 1 of Figs. 1, 2, 5 and 6 may specifically utilize advantages of aluminum casting of the rear part structure 10. This rear part structure 10 may be used in the corner connection area between the rear part structure 10, the battery frame structure 100, and the door frame structure 60 to create a strong connection area. Specifically, the rear part structure 10 can be secured to the sill structure 80 and/or the C-pillar structure 70 of the vehicle using an adhesive and/or mechanical joining such as rivets as well as bolts 45 for attachment to the battery frame structure 100. This creates a joint which is strong in the main loading directions, as well as being compact, allowing for an optimized battery 110 or battery pack. Three structures 10, 60, 100 may be connected in the same joint, which is a crucial joint for safety, Noise, Vibration and Harshness, and general driving loads. This area had also very limited space due to the big battery 110 in electric vehicles and a potential mixture of material putting demands on the joining method. Specifically, the door frame structure 60 may be made or comprise a different material than the rear part structure 10 and/or the battery frame structure 100, for example steel or other metal for the door frame structure 60 instead of or different from aluminum used for the rear part structure 10 and/or the battery frame structure 100.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 1: vehicle body
- 2: horizontal direction
- 10: rear part structure
- 20: base portion
- 30: wheelhouse portion
- 31: shock absorber segment
- 40: side member
- 41: first side member portion
- 42: second side member portion
- 43: outer contact surface
- 44: hole
- 45: hole
- 46: bolt
- 47: reinforcement rib
- 50: floor support structure
- 60: door frame structure
- 70: C-pillar structure
- 71: inner C-pillar portion
- 72: inner contact surface
- 80: sill structure
- 81: inner sill portion
- 82: inner contact surface
- 83: hole
- 90: rocker panel structure
- 91: outer sill portion and/or outer C-pillar portion
- 100: battery frame structure
- 101: opening
- 102: opening
- 110: battery

## Claims

1. A vehicle body (1) comprising a rear part structure (10), a battery frame structure (100), and a door frame structure (60), wherein the rear part structure (10) comprises at least one side member (40), the at least one side member (40) comprising a first side member portion (41) attached to the battery frame structure (100) and a second side member portion (42) attached to the door frame structure (60), wherein the second side member portion (42) is configured as a panel with an outer contact surface (43) forming a contact interface with an inner contact surface (72, 82) of the door frame structure (60).

2. The vehicle body (1) of claim 1, wherein the door frame structure (60) comprises a C-pillar structure (70) and a sill structure (80), and wherein the outer contact surface (43) of the second side member portion (42) is attached to the inner contact surface (72, 82) of an inner C-pillar portion (71) of the C-pillar structure (70) and/or an inner sill portion (81) of the sill structure (80).

3. The vehicle body (1) of claim 2, wherein the at least one side member (40) and/or the battery frame structure (100) is attached to a sill beam of the sill structure (80).

4. The vehicle body (1) of any one of the previous claims, wherein the second side member portion (42) extends in length along a length of the first side member portion (41), and wherein the second side member portion (42) extends in width substantially perpendicular to a length of the first side member portion (41)

5. The vehicle body (1) of any one of the previous claims, wherein the second side member portion (42) extends in length along a length of the door frame structure (60), and wherein the second side member portion (42) extends in width along a height of the door frame structure (60).

6. The vehicle body (1) of any one of the previous claims, wherein the first side member portion (41) is configured as a beam, wherein the first side member portion (41) and the second side member portion (42) extend together in length, and wherein the first side member portion (41) is tapered along its length.

7. The vehicle body (1) of any one of the previous claims, wherein the outer contact surface (43) of the second side member portion (42) is attached to the inner contact surface (72, 82) by one or more rivets and/or an adhesive.

8. The vehicle body (1) of any one of the previous claims, wherein the first side member portion (41) is attached to the battery frame structure (100) by one or more bolts (46), wherein the one or more bolts (46) extending in length in parallel to a width of the second side member portion (42).

9. The vehicle body (1) of any one of the previous claims, wherein the first side member portion (41) comprises one or more reinforcement ribs (47) extending in length along a length of the first side member portion (41).

10. The vehicle body (1) of any one of the previous claims, wherein the vehicle body (1) comprises two side members (40) extending in length in parallel to one another, each one of the two side members (40) comprising a first side member portion (41) attached to the battery frame structure (100) and a second side member portion (42) attached to the door frame structure (60), wherein the second side member portion (42) of each side member (40) is configured as a panel with an outer contact surface (43b) forming a contact interface with an inner contact surface (72, 82) of the door frame structure (60).

11. The vehicle body (1) of any one of the previous claims, wherein the battery frame structure (100) is attached to an inner sill portion (81) of a C-pillar structure (80) of the door frame structure (60).

12. The vehicle body (1) of any one of the previous claims, wherein the battery frame structure (100) is an extruded structure.

13. The vehicle body (1) of any one of the previous claims, wherein the rear part structure (10) is a monolithically casted structure.

14. The vehicle body (1) of any one of the previous claims, wherein the rear part structure (10) comprises a base portion (20) extending between two wheelhouse portions (30) of the rear part structure (10), and/or wherein the rear part structure (10) comprises at least one floor support structure (50) for supporting a luggage compartment floor thereon.

15. A vehicle comprising the vehicle body (1) of any one of the previous claims.
